# EUROPÄISCHE PATENTSCHRIFT

(11) **EP 0 998 699 B1**
(45) Veröffentlichungstag und Bekanntmachung des Hinweises auf die Patenterteilung: **24.10.2001**
(21) Anmeldenummer: 98940175.7
(22) Anmeldetag: 08.07.1998
(51) Int. Cl.: G05B 19/042

(54) **ELEKTRONISCHE SICHERHEITSSCHALTUNG**
ELECTRONIC PROTECTION CIRCUIT
CIRCUIT DE PROTECTION ELECTRONIQUE

(30) Priorität: 19.07.1997 DE 19731086
(43) Veröffentlichungstag der Anmeldung: 10.05.2000
(73) Patentinhaber: SATRONIC AG, 8157 Dielsdorf (CH)
(72) Erfinder: MEZGER, Roland, CH-8214 Gaechlingen (CH); BLANC, René, CH-8217 Wilchingen (CH); DÄHLER, Joel, CH-2000 Chur (CH)
(74) Vertreter: Leson, Thomas Johannes Alois, Dipl.-Ing.
(86) Internationale Anmeldenummer: EP9804230
(87) Internationale Veröffentlichungsnummer: WO9904324

(56) Entgegenhaltungen:
- US-A- 4 727 549
- US-A- 4 879 647
- US-A- 5 508 910
- PATENT ABSTRACTS OF JAPAN vol. 006, no. 129 (P-128), 15. Juli 1982 & JP 57 055432 A (SUMITOMO ELECTRIC IND LTD), 2. April 1982

## Beschreibung

Die vorliegende Erfindung bezieht sich auf eine elektronische Sicherheitsschaltung nach dem Gattungsbegriff des Patentanspruches 1. Eine derartige Sicherheitsschaltung ist aus US-A-4,727,549 oder US-A-4,879,647 bekannt. Hinsichtlich weiteren Standes der Technik wird auf US-A-5,508,910 und JP-A-57055432 verwiesen.

Bei Steuerungen mit sicherheitskritischen Anwendungen werden heutzutage Mikrokontroller eingesetzt, um programmgesteuert irgendwelche Stellglieder zu betätigen. Wenn der Mikrokontroller nicht ordnungsgemäß arbeitet, weil z.B. sein Taktgenerator ausfällt, so muß sichergestellt werden, daß die gesamte Steuerung in einen Zustand gebracht wird, in welchem die Stellglieder nach der sicheren Seite betätigt werden. Beispielsweise darf ein Brennstoffventil in einem solchen Fall nicht geöffnet werden.

Die ordnungsgemäße Funktion eines Mikrokontrollers kann beispielsweise überwacht werden, indem man programmgesteuert periodisch ein Start/Rücksetzsignal an einem seiner Ausgänge erzeugt, dessen Auftritt überwacht wird. Beim Ausbleiben dieses Signales wird ein Reset-Signal erzeugt, durch das der Mikrokontroller stillgesetzt wird. Hiervon ausgehend ist es die Aufgabe der vorliegenden Erfindung, eine elektronische Sicherheitsschaltung anzugeben, die die Betätigung eines Stellgliedes nur ermöglicht, wenn ein in die Steuerung einbezogener Mikrokontroller ordnungsgemäß arbeitet.

Die Lösung dieser Aufgabe gelingt gemäß den kennzeichnenden Merkmalen des Patentanspruches 1. Weitere vorteilhafte Ausgestaltungen der erfindungsgemäßen Sicherheitsschaltung sind den abhängigen Ansprüchen entnehmbar.

Anhand der Figuren der beiliegenden Zeichnung sei im folgenden ein Ausführungsbeispiel der erfindungsgemäßen Sicherheitsschaltung beschrieben. Es zeigen:
- Fig. 1: ein Blockschaltbild des grundsätzlichen Aufbaues der Sicherheitsschaltung;
- Fig. 2: ein detailliertes Schaltungsschema der erfindungsgemäßen Sicherheitsschaltung;
- Fig. 2a: das Prinzipschaltbild eines Mikrokontrollers;
- Fig. 2b: die Schaltung eines Rampengenerators;
- Fig. 2c: das Schaltbild einer Überwachungsschaltung mit eingebauter Verzögerung;
- Fig. 2d: das Schaltbild eines Reset-Generators; und
- Fig. 2e: das Schaltbild einer Ventilansteuerung.

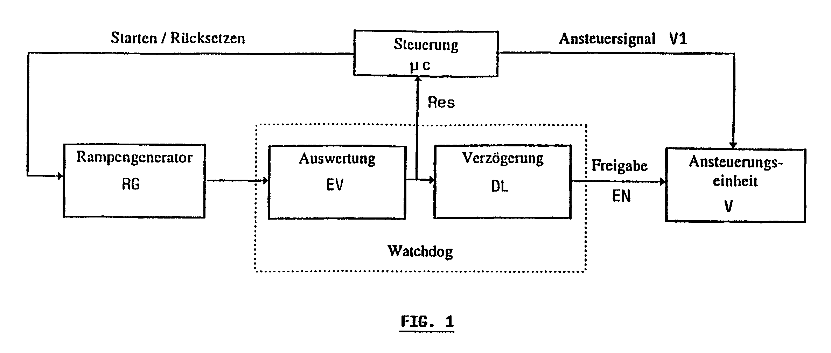

Gemäß Fig. 1 liefert eine Steuerung µc ein Ansteuersignal V1 an eine Ansteuereinheit V, die ein zusätzliches Freigabesignal En benötigt, um beim Vorliegen des Ansteuersignales V1 betätigt zu werden. Die Steuerung µc gibt periodisch in einem bestimmten zeitlichen Abstand ein Start- und ein Rücksetzsignal aus, das einem Rampengenerator RG zugeführt wird. Der Hochlauf der Rampe wird durch das Startsignal ausgelöst und durch das Rücksetzsignal beendet, mit welchem gleichzeitig die Rampe zurückgesetzt wird. Start- und Rücksetzsignal bestehen hierbei aus der negativen und positiven Flanke eines Impulses. Eine Auswerteschaltung EV überwacht, ob die Rampe innerhalb einer bestimmten Zeit einen unteren Pegelwert erreicht bzw. einen oberen Pegelwert nicht überschreitet. Wird der untere Pegelwert nicht erreicht oder der obere Pegelwert überschritten. so wird ein Reset für die Steuerung µc erzeugt und ein Freigabesignal für die Ansteuereinheit V gesperrt. Ein Verzögerungsglied DL erzeugt verzögert die Aufhebung der Sperrung des Freigabesignales En an die Ansteuereinheit V. Das Freigabesignal wird solange gesperrt bis entweder erneut ein Reset erzeugt wurde oder die Steuerung wieder ordnungsgemäß arbeitet. Dadurch wird erreicht, daß bei nicht ordnungsgemäßer Funktion der Steuerung µc die Ansteuereinheit V permanent gesperrt wird.

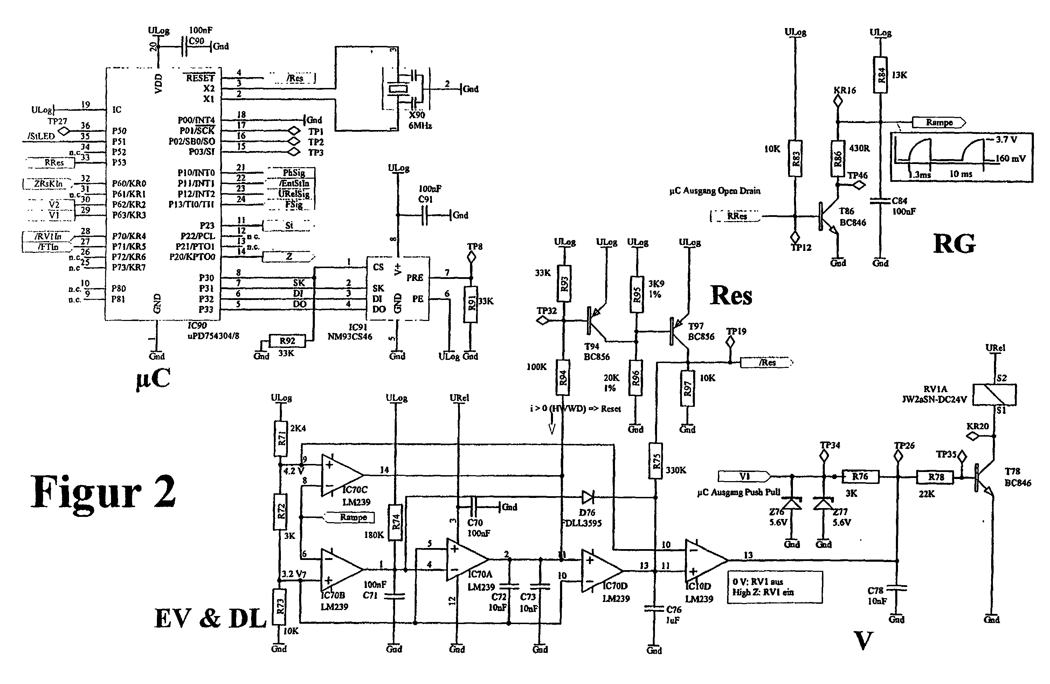

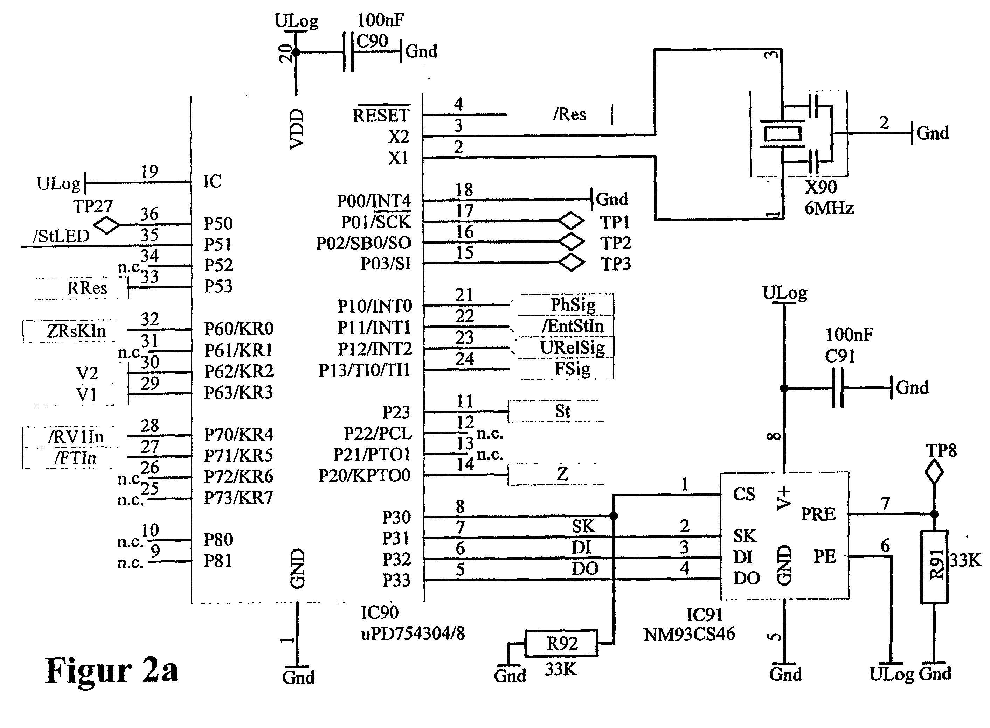

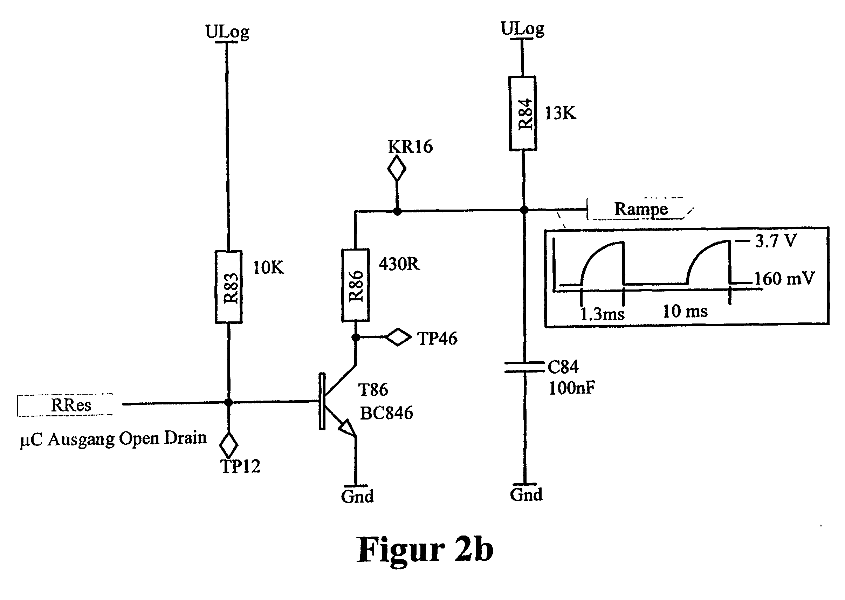

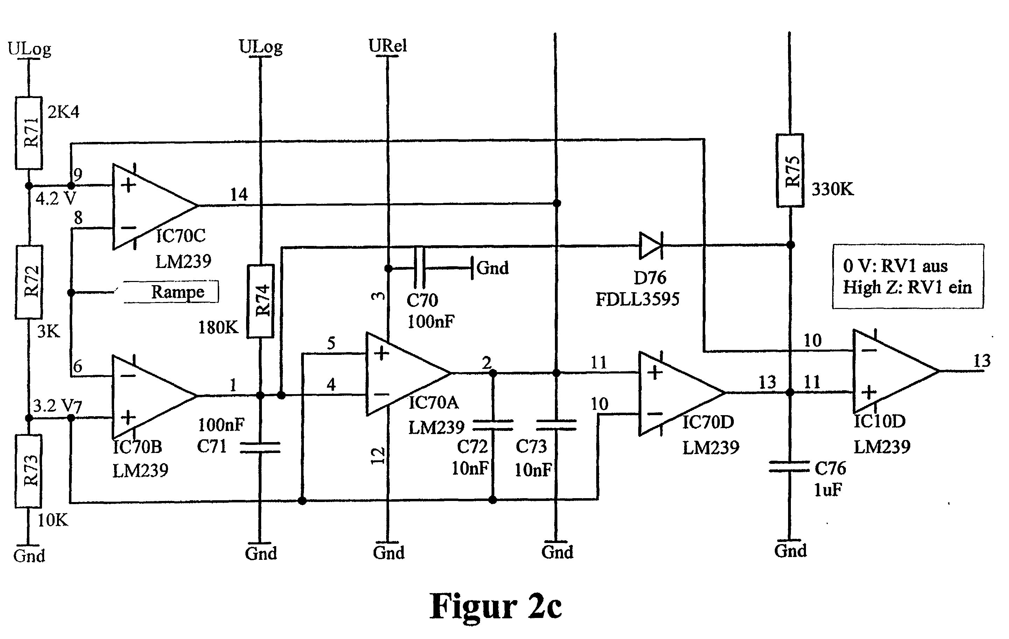

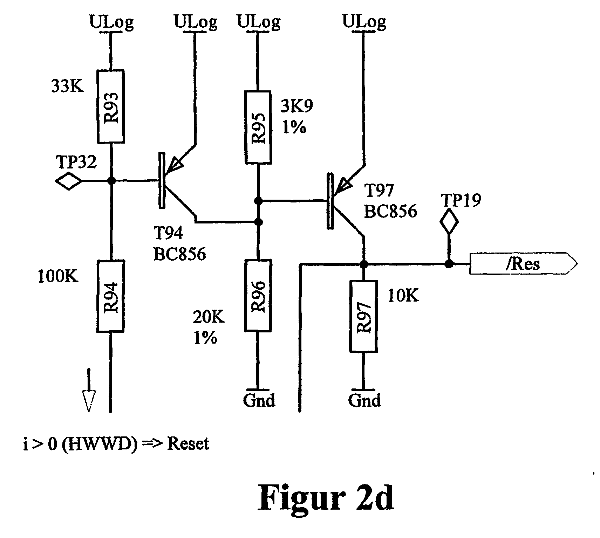

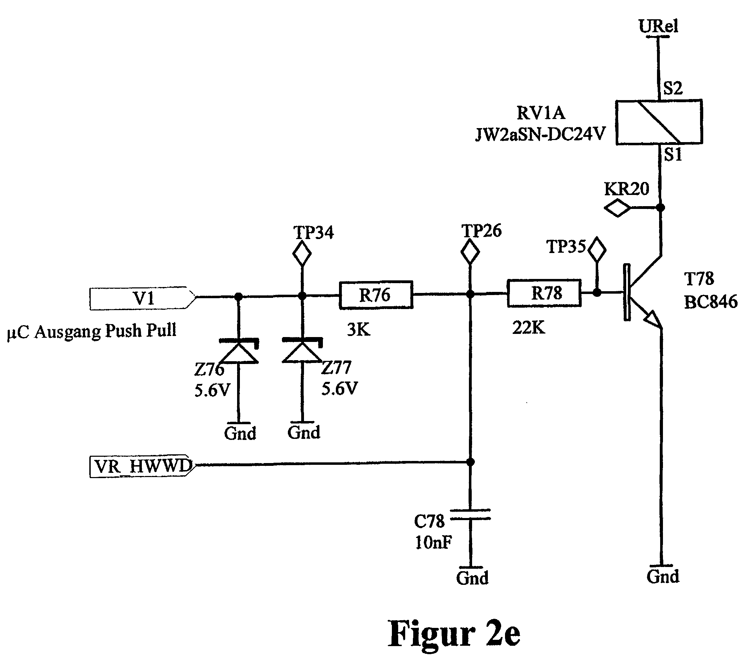

Gemäß Fig. 2 umfaßt die elektronische Sicherheitsschaltung die Steuerung µc, den Rampengenerator RG. die Auswertung und Verzögerung EV, DL, den Reset-Generator Res und die Ansteuereinheit V. In den Figuren 2a bis 2e ist jedes dieser Schaltungselemente vergrößert dargestellt, wobei Aufbau und Funktion der erfindungsgemäßen Sicherheitsschaltung anhand dieser Figuren beschrieben wird.

Gemäß Fig. 2, 2a besteht die Steuerung aus einem handelsüblichen Mikrokontroller µc, der mit einem Quarzresonator beschaltet ist. Der Mikrokontroller wird zwischen der Betriebsspannung ULog (VDD = 5V) und Masse (Gnd) betrieben und er weist eine Reihe von Aus- und Eingängen auf, von denen für die Funktion der vorliegenden Erfindung nur die folgenden von Bedeutung sind:
- /Res: Reseteingang, der bei hohem Potential (z.B. grösser 0,8 ULog) die Funktion des Mikrokontrollers freigibt und bei niedrigem Potential (kleiner 0,2 ULog) unterbindet;
- RRes: Ausgang, der durch Programmierung des Mikrokontrollers bei dessen ordnungsgemäßer Funktion das Start/Rücksetz-Signal periodisch ausgibt; und
- V1: Ausgang, der der Betätigung eines Stellgliedes dient, z.B. eines Brennstoffventiles in einer sicherheitsrelevanten Anwendung bei einem Feuerungsautomaten.

Gemäß Fig. 2. 2b wird der Ausgang RRes auf einen Rampengenerator bekannter Bauart geschaltet. Der Rampengenerator besteht aus einem Kondensator C84, der über einen Widerstand R84 aus der Betriebsspannung ULog aufgeladen wird, wobei die Zeitkonstante durch die RC-Kombination vorgegeben wird. Der gemeinsame Verbindungspunkt von Widerstand und Kondensator liefert die Rampenspannung und ist über einen relativ niedrigen Widerstand R86 und einen Transistor T86 mit dem Bezugspotential Gnd verbindbar. Die Basis des Transistors T86 liegt über einen Widerstand R83 an der Betriebsspannung ULog und wird zusätzlich von dem Signal RRes beaufschlagt. Ist dieser Ausgang hochohmig (Open), so ist der Transistor T86 im stromführenden Zustand und der Kondensator C84 wird über den relativ niederohmigen Widerstand R86 rasch entladen. Ist der Ausgangspegel tief, so wird der Transistor T86 gesperrt und die Rampe läuft hoch, da der Kondensator C84 über den Widerstand R84 aufgeladen wird.

Gemäß Fig. 2. 2c wird das Ausgangssignal des Rampengenerators auf eine Überwachungs- und Verzögerungsschaltung geschaltet. Diese umfaßt an ihrem Eingang einen Spannungsteiler. bestehend aus der Reihenschaltung dreier Widerstände R71, R72, R73, die zwischen Betriebsspannung ULog und Bezugspotential Gnd geschaltet sind. Hierdurch werden an den Abgriffpunkten des Spannungsteilers Schwellwertspannungen von ca. 3,2V und 4.2V vorgegeben. Diese Abgriffpunkte sind auf die Pluseingänge von zwei Komparatoren IC70B und IC70C geführt, deren Minuseingängen das Rampensignal zugeführt wird. Der Ausgang des die untere Schwelle (3,2V) überwachenden Komparators IC70B ist über einen Kondensator C71 an Bezugspotential gelegt, während der Ausgang des die obere Schwelle (4,2V) überwachenden Komparators IC70C über einen Kondensator C73 an Bezugspotential gelegt ist. Ferner ist der Kondensator C71 über einen Widerstand R74 an die Betriebsspannung ULog angeschlossen. Der Kondensator C73 liegt über die Reihenschaltung zweier Widerstände R94, R93 an der Betriebsspannung. Der gemeinsame Schaltungspunkt von Kondensator C71 und Widerstand R74 ist an den Minuseingang eines weiteren Komparators IC70A angeschlossen, dessen Pluseingang ebenfalls mit dem unteren Schwellwert (3,2V) verbunden ist. Der Ausgang des Komparators IC70A liegt ebenfalls an dem Kondensator C73 und ist ferner über einen Kondensator C72 mit dem unteren Schwellwert (3,2V) verbunden. Der Ausgang des Komparators IC 70A liegt am Pluseingang eines weiteren Komparators IC70D. dessen Minuseingang an dem unteren Schwellwert (3,2V) liegt. Der Ausgang des Komparators IC70D liegt über einen Kondensator C76 an Bezugspotential und ferner über einen Widerstand R75 am Kollektor eines Transistors T97, der über einen Widerstand R97 ebenfalls an Bezugspotential liegt. Eine Diode D76 liegt zwischen Ausgängen der Komparatoren IC70B und IC70D und damit auch zwischen den beiden Kondensatoren C71 und C76.

Der Ausgang des Komparators IC70D und somit auch der Kondensator C76 sind an den Pluseingang eines weiteren Komparators IC10D angeschlossen, dessen Minuseingang an dem oberen Schwellwert (4,2V) liegt. Am Ausgang des Komparators IC10D wird das Verriegelungssignal VR abgenommen.

Alle Komparatoren dieser Überwachungsschaltung werden zwischen einer Spannung URel von etwa 22V und Bezugspotential betrieben. Jeder Komparator ist an seinem Ausgang hochohmig. wenn der Pluseingang über dem Minuseingang liegt und er weist umgekehrt einen tiefen Pegel auf. wenn der Minuseingang über dem Pluseingang liegt.

Gemäß Fig. 2. 2d umfaßt ein Reset-Generator einen ersten Transistor T94. dessen Emitter an der Betriebsspannung liegt und dessen Basis an den gemeinsamen Schaltungspunkt der Widerstände R93. R94 angeschlossen ist. Der Kollektor des Transistors T94 ist an die Basis eines weiteren Transistors T97 angeschlossen, dessen Emitter ebenfalls mit der Betriebsspannung verbunden ist und dessen Kollektor wie bereits erwähnt über den Widerstand R97 an das Bezugspotential gelegt ist. Ein Spannungsteiler, bestehend aus den Widerständen R95, R96 ist zwischen die Betriebsspannung ULog und Bezugspotential Gnd geschaltet und hält den Transistor T97 normalerweise im stromführenden Zustand, so daß das am Kollektor des Transistors T97 abgenommene Reset-Signal /Res ein hohes Potential geringfügig unter der Betriebsspannung aufweist.

Nur wenn der Kondensator C73 entladen und wieder aufgeladen wird und ein Strom über die Widerstände R93, R94 fließt, gelangt der Transistor T94 in den stromführenden Zustand und der Transistor T97 wird gesperrt, so daß ein Reset-Signal /Res mit niedrigem Pegel erzeugt wird. Dieses Reset-Signal bringt den Mikrokontroller in einen definierten Zustand, bei dem das Ansteuersignal V1 nicht erzeugt wird.

Gemäß Fig. 2, 2e ist ein Transistor T78 angeordnet, dessen Emitter an Bezugspotential liegt und dessen Kollektor über eine Relaisspule RV1A des Ventils V an die Betriebsspannung URel angeschlossen ist. Die Basis des Transistors T78 wird über die Reihenschaltung zweier Widerstände R76, R78 mit dem Ansteuersignal V1 des Mikrokontrollers angesteuert. Der gemeinsame Schaltungspunkt der beiden Widerstände R76, R78 liegt über einen Kondensator C78 an Bezugspotential und das Verriegelungssignal VR liegt ebenfalls an diesem gemeinsamen Schaltungspunkt, so daß eine Betätigung des Transistors T78 verhindert wird. solange das Verriegelungssignal VR den niedrigen Pegel aufweist. Dies ist der Fall, solange ein Reset erzeugt wird (C73 ist entladen bzw. wird aufgeladen; C76 ist teilweise entladen und muß mit entsprechend großer Zeitkonstante wieder nachgeladen werden). Die beiden Zenerdioden Z76, Z77 am Eingang der Schaltung dienen der Spannungsbegrenzung und dem Schutz der Schaltung.

Anhand des vorstehend beschriebenen Aufbaues sei im folgenden die Funktion der erfindungsgemäßen Sicherheitsschaltung näher erläutert.

Grundsätzlich wird ein Reset für den Mikrokontroller erzeugt durch Entladung und Wiederaufladung des Kondensators C73. Dies geschieht, wenn die Rampe den unteren Schwellwert (3,2V) nicht oder verspätet erreicht. In diesem Fall bleibt der Ausgang des Komparators IC70B permanent oder zu lange hochohmig, so daß der Kondensator C71 über den Widerstand R74 auf 3,2V oder höher aufgeladen wird. Dann schaltet aber der Komparator IC70A an seinem Ausgang auf den tiefen Pegel und entlädt den Kondensator C73.

Gleiches geschieht, wenn die Rampe den oberen Schwellwert (4,2V) überschreitet. Dann schaltet der Ausgang des Komparators IC70C auf den tiefen Pegel und entlädt den Kondensator C73.

Bei einer Entladung des Kondensators C73 schaltet auch der Ausgang des Komparators IC70D auf den tiefen Pegel, wodurch der Kondensator C76 entladen wird. Wenn das Potential des Kondensators C76 unter 4,2V fällt, so gibt der Komparator IC10D den tiefen Pegel aus. mit welchem das Verriegelungssignal VR die Betätigung des Ventils V sperrt. Die Erzeugung des Verriegelungssignales VR ist gleichbedeutend mit einer Sperrung des Freigabesignales En. Die Verriegelung des Ventils kann erst aufgehoben werden, wenn der Kondensator C76 mit relativ großer Zeitkonstante wieder aufgeladen ist, was nur der Fall ist. wenn kein erneuter Reset erfolgt.

Im Detail ist die Funktion der Schaltung wie folgt:

### 1. Überwachung der Rampe auf Erreichen des unteren Schwellwertes

Wie bereits erwähnt. schaltet der Ausgang des Komparators IC70A auf den niedrigen Pegel und entlädt den Kondensators C73, wenn der Kondensator C71 auf den unteren Schwellwert von 3,2V aufgeladen wurde oder diesen Schwellwert überschreitet. Über den Kondensator C72 wird eine Hysterese eingeführt, indem der untere Schwellwert kurzfristig auf ein Potential von ca. 3,2 - 5 = -1,8V gezogen wird. Der untere Schwellwert steigt anschließend mit einer Zeitkonstanten von ca. 30µs zurück auf 3.2V. Somit liegt die Rampenspannung zumindest zeitweilig über dem unteren Schwellwert, so daß der Komparator IC70B am Ausgang auf den tiefen Pegel schaltet und den Kondensator C71 entlädt. Je nachdem wie hoch die Rampenspannung ist, wird der Kondensator C71 nur wenig oder vollständig entladen. Die Entladezeit des Kondensators C73 beträgt lediglich 0,1 bis 1.2 µs. so daß dieser vollständig entladen wird, weil der untere Schwellwert während dieser Zeit noch nicht wieder das positive Potential erreicht hat. Wenn der untere Schwellwert das Potential auf dem Kondensator C71 erreicht hat. wird der Kondensator C73 wieder aufgeladen mit einer Zeitkonstanten von ca. 0,8 bis 1,2 ms. Solange der Kondensator C73 entladen ist und wieder geladen wird, fließt ein Strom durch den Transistor T94 und den Widerstand R94 und es wird während ca. 1 bis 5 ms ein Reset erzeugt. Das Potential des Kondensators C73 bleibt während mindestens 0,8 ms unterhalb des unteren Schwellwertes und der Komparator IC70D schaltet solange tief und entlädt den Kondensator C76. Die Entladezeit des Kondensators C76 liegt unterhalb 1 ms. Der Kondensator C76 wird hierbei auf weniger als 0,5V entladen, wodurch über die Diode D76 auch der Kondensator C71 auf etwa 0,5 bis 1V entladen wird. Anschließend werden die Kondensatoren C71 und C76 mit einer Zeitkonstanten von 100 bis 150 ms wieder aufgeladen. Nach erfolgter Aufladung des Kondensators C71 auf 3,2V kann der Zyklus von neuem beginnen. In der Zwischenzeit kann der Mikrokontroller seinen Betrieb starten und die Rampenspannung korrekt erzeugen. Die Aufladung des Kondensators C76 von 3,2V auf 4,2V erfolgt mit einer relativ hohen Zeitkonstanten von 180 bis 300 ms nach dem Reset, während welcher Zeit durch den Komparator IC10D das Verriegelungssignal VR mit tiefem Pegel ausgegeben wird. Der Reset wird erzeugt, wenn die Rampe über eine gewisse Zeit den Schwellwert nicht erreicht. C71 wird periodisch wieder entladen, wenn die Rampe korrekt ist.

### 2. Überwachung der Rampe auf Nicht-Erreichen des oberen Schwellwertes

Wenn die Rampenspannung den oberen Schwellwert von 4,2V übersteigt, so schaltet der Komparator IC70C an seinem Ausgang auf den niedrigen Pegel und entlädt den Kondensator C73. In der Folge fließt ein Strom durch den Transistor T94 und den Widerstand R94 und der Reset des Mikrokontrollers wird erzeugt. Hierdurch gibt der Mikrokontroller das Signal RRes hochohmig aus, wodurch die Rampenspannung sofort zurückgesetzt wird und der Komparator IC70C am Ausgang wieder den hohen Pegel ausgibt. Die Rampenspannung bleibt solange auf dem tiefen Pegel, bis der Mikrokontroller sie kontrolliert startet. Der Kondensator C73 wird über den Widerstand R94 wieder aufgeladen, wobei die Zeitkonstante bei 0,8 bis 1,2 ms liegt. Solange das Potential auf dem Kondensator C73 unterhalb 3,2V liegt, schaltet der Komparator IC70D auf den tiefen Pegel und entlädt den Kondensator C76. Damit wird wieder über die Diode D76 auch der Kondensator C71 bis ca. 0.5 bis 1V entladen. Dies verzögert das Ansprechen auf den tiefen Rampenwert mindestens für die folgenden 80 ms. Wie bei der Überwachung des unteren Schwellwertes hat der Mikrokontroller solange Zeit zum Neustart. Sofort nach Übersteigen des oberen Schwellwertes durch die Rampenspannung wird die Rampenspannung auf Grund des Resets zurückgesetzt. Damit der Kondensator C73 trotzdem genügend entladen wird, ist auch hier eine dynamische Hysterese über den Kondensator C72 verwirklicht, der den oberen Schwellwert über den Widerstand R72 kurzzeitig absenkt. Würde der Kondensator C73 nicht genügend entladen, so bliebe dem Komparator IC70D nicht genügend Zeit. um den Kondensator C76 zu entladen. Damit bliebe das Potential auf den Kondensatoren C76 und 71 zu hoch und das Ansprechen auf den unteren Schwellwert würde nicht verzögert.

### 3. Verriegelung RV1

Der Kondensator C76 speichert den Zustand des Verriegelungssignales RV1. Solange sein Potential unterhalb 4,2V liegt, schaltet der Komparator IC10D an seinem Ausgang auf den tiefen Pegel und schaltet somit den Transistor T78 aus, wodurch das Ventil ausgeschaltet wird. Die Diode D76 sorgt für die Verzögerung nach einem Reset. Bei Entladung des Kondensators C76 wird über die Diode D76 ebenfalls der Kondensator C71 entladen und entsprechend langsam aufgeladen mit einer Zeitkonstanten von etwa 100 bis 150 ms. Der Sperrstrom über die Diode D76 ist so gering, daß über den Widerstand R75 das Reset-Signal nicht wesentlich beeinflußt wird. Der nächste Reset wird jedoch erst verzögert, wenn das Potential des Kondensators C71 kleiner als 3,2V ist. Dann ist auch das Potential des Kondensators C76 kleiner als 3,2V. Die Aufladung des Kondensators C76 von 3,2 auf 4,2V dauert etwa 250 bis 400 ms. Während dieser Zeit bleibt das Verriegelungssignal VR für das Ventil nach der Aufhebung des Resets noch auf dem niedrigen Pegel, wodurch verhindert wird. daß der Mikrokontroller das Ventil einschalten kann bevor die Sicherheitsschaltung eventuell erneut anspricht. Dies führt im Fehlerfall zur permanenten Verriegelung.

## Patentansprüche

1. Elektronische Sicherheitsschaltung für eine ein Stellglied (V) mit einem Ansteuersignal (V1) ansteuernde Steuerung (µc), welche Steuerung bei ordnungsgemäßem Betrieb periodisch ein Start/Rücksetz-Signal in einem vorgegebenen zeitlichen Abstand ausgibt, aufweisend:
eine den zeitlichen Auftritt des Start/Rücksetz-Signales überwachende Schaltung (RG,EV), die bei fehlendem Start- oder fehlendem bzw. verspätetem Rücksetzsignal ein Freigabesignal (En) für das Stellglied (V) sperrt, wobei die Sperrung des Freigabesignales für das Stellglied verzögert aufgehoben wird, und
die den zeitlichen Auftritt des Start/Rücksetz-Signales überwachende Schaltung zusätzlich ein Sperrsignal (Res) an die Steuerung (µc) erzeugt, wobei die den zeitlichen Auftritt des Start/Rücksetz-Signales überwachende Schaltung einen Rampengenerator (RG) umfaßt, dessen Rampe durch das Startsignal gestartet und
durch das Rücksetzsignal zurückgesetzt wird, **dadurch gekennzeichnet, daß** die den zeitlichen Auftritt des Start/Rücksetz-Signales überwachende Schaltung eine Pegelüberwachungsschaltung (EV) mit Verzögerungsglied (DL) umfaßt, und die Verzögerungszeit des Verzögerungs-gliedes größer als die Periode der Rampenfunktion ist.

2. Sicherheitsschaltung nach Anspruch 1, **dadurch gekennzeichnet, daß** die Pegelüberwachungsschaltung aufweist: einen ersten Komparator (IC70B), der die Rampenfunktion mit einem unteren Schwellwert vergleicht, einen zweiten Komparator (IC70C), der die Rampenfunktion mit einem oberen Schwellwert vergleicht, daß der Ausgang des ersten Komparators (IC70B) an einen ersten Kondensator (C71) angeschlossen ist, der über einen Widerstand (R74) einerseits an Betriebsspannung (ULog) und andererseits an Bezugspotential (Gnd) liegt, daß der Ausgang des zweiten Komparators (IC70C) an einen zweiten Kondensator (C73) angeschlossen ist, der einerseits an einen Resetgenerator angeschlossen ist und andererseits an Bezugspotential (Gnd) liegt und daß der erste Kondensator (C71) an einen dritten Komparator (IC70A) angeschlossen ist, dessen anderem Eingang ebenfalls der untere Schwellwert zugeführt wird und der mit seinem Ausgang auf den zweiten Kondensator (C73) geschaltet ist.

3. Sicherheitsschaltung nach Anspruch 2, **dadurch gekennzeichnet, daß** ein vierter Komparator (IC70D) angeordnet ist, der die Ladung des zweiten Kondensators (C73) mit dem unteren Schwellwert vergleicht und dessen Ausgang auf einen dritten Kondensator (C76) geschaltet ist, der einerseits über einen Widerstand (R75) mit dem Ausgang des Resetgenerators verbunden ist und andererseits an Bezugspotential (Gnd) liegt

4. Sicherheitsschaltung nach Anspruch 3, **dadurch gekennzeichnet, daß** der erste Kondensator (C71) mit dem dritten Kondensator (C76) über eine in Durchlaßrichtung gepolte Diode (D76) verbunden ist.

5. Sicherheitsschaltung nach Anspruch 4, **dadurch gekennzeichnet, daß** der Ausgang des dritten Komparators (IC70A) über einen vierten Kondensator (C72) mit dem unteren Schwellwert verbunden ist.

6. Sicherheitsschaltung nach Anspruch 5, **dadurch gekennzeichnet, daß** ein fünfter Komparator (IC10D) angeordnet ist, der den Ausgang des vierten Komparators (IC70D) mit dem einen Schwellwert vergleicht und dessen Ausgang das Freigabesignal für das Stellglied erzeugt.

7. Sicherheitsschaltung nach Anspruch 6, **dadurch gekennzeichnet, daß** der zweite Kondensator (C73) über die Reihenschaltung zweier Widerstände (R93,R94) an die Betriebsspannung (ULog) angeschlossen ist, daß der gemeinsame Schaltungspunkt der beiden Widerstände (R93,R94) mit der Basis eines Transistors (T94) verbunden ist, dessen Emitter an die Betriebsspannung (ULog) und dessen Kollektor an die Basis eines weiteren Transistors (T97) angeschlossen ist, dessen Emitter an der Betriebsspannung (ULog) liegt und dessen Kollektor über einen Widerstand (R97) an Bezugspotential (Gnd) angeschlossen ist und das Resetsignal (/Res) erzeugt, wobei die Basis des weiteren Transistors (T97) an einen zwischen Betriebsspannung und Bezugspotential angeordneten Spannungsteiler (R95,R96) angeschlossen ist.

8. Sicherheitsschaltung nach Anspruch 7, **dadurch gekennzeichnet, daß** das Ansteuersignal (V1) über zwei in Reihe geschaltete Widerstände (R76,R78) mit der Basis eines Transistors (T78) verbunden ist, in dessen Kollektorkreis eine Relaisspule (RV1A) angeordnet ist und daß der gemeinsame Schaltungspunkt der beiden Widerstände (R76,R78) über einen Kondensator (C78) an Bezugspotential (Gnd) liegt und mit dem Ausgang des fünften Komparators (IC10D) verbunden ist.

## Claims

1. Electronic protective circuit for a controller (µc) driving a control element (V) with a drive signal (V1), which controller cyclically outputs a start/reset signal at a prescribed time interval during correct operation, having:
a circuit (RG, EV) which monitors the time at which the start/reset signal appears and blocks an enable signal (En) for the control element (V) if the start signal does not appear or if the reset signal does not appear or is late, the block on the enable signal for the control element being cleared with a delay, and the circuit which monitors the time at which the start/reset signal appears additionally generating a blocking signal (Res) and sending it to the controller (µc), the circuit which monitors the time at which the start/reset signal appears comprising a ramp generator (RG) whose ramp is started by the start signal and is reset by the reset signal, **characterized in that** the circuit which monitors the time at which the start/reset signal appears comprises a level monitoring circuit (EV) with a delay element (DL), and the delay time of the delay element is greater than the period of the ramp function.

2. Protective circuit according to Claim 1,
**characterized in that** the level monitoring circuit has:
a first comparator (IC70B), which compares the ramp function with a lower threshold value, a second comparator (IC70C), which compares the ramp function with an upper threshold value, **in that** the output of the first comparator (IC70B) is connected to a first capacitor (C71), one end of which is connected to operating voltage (ULog) via a resistor (R74), and the other end of which is connected to reference-ground potential (Gnd), **in that** the output of the second comparator (IC70C) is connected to a second capacitor (C73), one end of which is connected to a reset generator, and the other end of which is connected to reference-ground potential (Gnd), and **in that** the first capacitor (C71) is connected to a third comparator (IC70A), whose other input likewise has the lower threshold value supplied to it and whose output is connected to the second capacitor (C73).

3. Protective circuit according to Claim 2,
**characterized in that** a fourth comparator (IC70D) is provided which compares the charge in the second capacitor (C73) with the lower threshold value and whose output is connected to a third capacitor (C76), one end of which is connected to the output of the reset generator via a resistor (R75), and the other end of which is connected to reference-ground potential (Gnd).

4. Protective circuit according to Claim 3,
**characterized in that** the first capacitor (C71) is connected to the third capacitor (C76) via a forward-biased diode (D76).

5. Protective circuit according to Claim 4,
**characterized in that** the output of the third capacitor (IC70A) is connected to the lower threshold value via a fourth capacitor (C72).

6. Protective circuit according to Claim 5,
**characterized in that** a fifth comparator (IC10D) is provided which compares the output of the fourth comparator (IC70D) with one threshold value and whose output generates the enable signal for the control element.

7. Protective circuit according to Claim 6,
**characterized in that** the second capacitor (C73) is connected to the operating voltage (ULog) via the series circuit comprising two resistors (R93, R94), **in that** the common connection point between the two resistors (R93, R94) is connected to the base of a transistor (T94) whose emitter is connected to the operating voltage (ULog) and whose collector is connected to the base of a further transistor (T97), whose emitter is connected to the operating voltage (ULog) and whose collector is connected to reference-ground potential (Gnd) via a resistor (R97) and generates the reset signal (/Res), the base of the further transistor (T97) being connected to a voltage divider (R95, R96) arranged between operating voltage and reference-ground potential.

8. Protective circuit according to Calim 7,
**characterized in that** the drive signal (V1) is connected via two series-connected resistors (R76, R78) to the base of a transistor (T78) whose collector circuit contains a relay coil (RV1A), and **in that** the common connection point between the two resistors (R76, R78) is connected to reference-ground potential (Gnd) via a capacitor (C78) and is connected to the output of the fifth comparator (IC10D).

## Revendications

1. Circuit de protection électronique pour une commande (µc) commandant un actionneur (V) par un signal de commande (V1), ladite commande délivrant périodiquement, en exploitation normale, un signal de démarrage/remise à zéro dans un intervalle de temps prédéterminé, présentant :
un circuit (RG,EV) contrôlant l'apparition dans le temps du signal de démarrage/remise à zéro, qui bloque un signal de libération (En) pour l'actionneur (V) lorsque le signal de démarrage fait défaut ou que le signal de remise à zéro fait défaut ou est retardé, où le blocage du signal de libération pour l'actionneur est neutralisé de manière différée, et le circuit contrôlant l'apparition dans le temps du signal de démarrage/remise à zéro génère en outre un signal de blocage (Res) sur la commande (µc), où le circuit contrôlant l'apparition dans le temps du signal de démarrage/remise à zéro comprend un générateur de rampe (RG) dont la rampe est amorcée par le signal de démarrage et est remise à zéro par le signal de remise à zéro, **caractérisé en ce que** le circuit contrôlant l'apparition dans le temps du signal de démarrage/remise à zéro comprend un circuit de contrôle de niveau (EV) avec un composant de temporisation (DL) et le temps de temporisation du composant de temporisation est plus grand que la période de la fonction à rampe.

2. Circuit de protection selon la revendication 1, **caractérisé en ce que** le circuit de contrôle de niveau présente un premier comparateur (IC70B), qui compare la fonction à rampe à une valeur de seuil inférieure, un deuxième comparateur (IC70C), qui compare la fonction à rampe à une valeur de seuil supérieure, **en ce que** la sortie du premier comparateur (IC70B) est connectée à un premier condensateur (C71), qui est placé, via une résistance (R74), d'une part sous une tension d'exploitation (Ulog) et d'autre part à un potentiel de référence (Gnd), **en ce que** la sortie du deuxième comparateur (IC70C) est connectée à un deuxième condensateur (C73), qui est connecté d'une part à un générateur de remise à zéro et est placé d'autre part à un potentiel de référence (Gnd) et **en ce que** le premier condensateur (C71) est connecté à un troisième comparateur (IC70A), à l'autre entrée duquel la valeur de seuil inférieure est également amenée et qui est connecté au deuxième condensateur (C73) par sa sortie.

3. Circuit de protection selon la revendication 2, **caractérisé en ce qu'**on dispose un quatrième comparateur (IC70D) qui compare la charge du deuxième condensateur (C73) à la valeur de seuil inférieure et dont la sortie est connectée à un troisième condensateur (C76), qui d'une part est raccordé via une résistance (R75) à la sortie du générateur de remise à zéro et qui est d'autre part placé à un potentiel de référence (Gnd).

4. Circuit de protection selon la revendication 3, **caractérisé en ce que** le premier condensateur (C71) est raccordé au troisième condensateur (C76) via une diode (D76) polarisée dans le sens de la conduction.

5. Circuit de protection selon la revendication 4, **caractérisé en ce que** la sortie du troisième comparateur (IC70A) est associée à la valeur de seuil inférieure via un quatrième condensateur (C72).

6. Circuit de protection selon la revendication 5, **caractérisé en ce qu'**on dispose un cinquième comparateur (IC10D) qui compare la sortie du quatrième comparateur (IC70D) à ladite valeur de seuil et dont la sortie génère le signal de libération pour l'actionneur.

7. Circuit de protection selon la revendication 6, **caractérisé en ce que** le deuxième condensateur (C73) est connecté, via la connexion en série de deux résistances (R93,R94) à la tension d'exploitation (ULog), **en ce que** le point de connexion commun des deux résistances (R93,R94) est connecté à la base d'un transistor (T94), dont l'émetteur est connecté à la tension d'exploitation (ULog) et dont le collecteur est connecté à la base d'un autre transistor (T97) dont l'émetteur est placé sous la tension d'exploitation (ULog) et dont le collecteur est connecté via une résistance (R97) à un potentiel de référence (Gnd), et génère le signal de remise à zéro (/Res), la base de l'autre transistor (T97) étant connectée à un diviseur de tension (R65,R96) disposé entre la tension d'exploitation et le potentiel de référence.

8. Circuit de protection selon la revendication 7, **caractérisé en ce que** le signal de commande (V1) est raccordé via deux résistances (R76,R78) connectées en série à la base d'un transistor (T78) dans le circuit collecteur duquel est disposée une bobine de relais (RV1A) et **en ce que** le point de connexion commun des deux résistances (R76,R78) est placé via un condensateur (C78) à un potentiel de référence (Gnd) et est raccordé à la sortie du cinquième comparateur (IC10D).
